# EUROPÄISCHE PATENTSCHRIFT

(11) **EP 0 835 532 B1**
(45) Veröffentlichungstag und Bekanntmachung des Hinweises auf die Patenterteilung: **28.12.2005**
(21) Anmeldenummer: 96914982.2
(22) Anmeldetag: 24.04.1996
(51) Int. Cl.: H01M 10/44, H01M 10/28, H02J 7/00

(54) **VERFAHREN ZUR VERRINGERUNG DES INNENWIDERSTANDES VON WIEDERAUFLADBAREN AKKUMULATOREN**
METHOD FOR REDUCING THE INTERNAL RESISTANCE OF RECHARGEABLE BATTERIES
PROCEDE POUR REDUIRE LA RESISTANCE INTERNE D'ACCUMULATEURS RECHARGEABLES

(43) Veröffentlichungstag der Anmeldung: 15.04.1998
(73) Patentinhaber: SANYO ELECTRIC CO., LTD., Moriguchi City, Osaka (JP)
(72) Erfinder: HELBING, Ralf, D-73433 Aalen (DE); AGULLA, Manuel, D-45327 Essen (DE)
(74) Vertreter: Schmidt, Steffen J.
(86) Internationale Anmeldenummer: PCT/EP1996/001710
(87) Internationale Veröffentlichungsnummer: WO 1997/040544

(56) Entgegenhaltungen:
- EP-A- 0 135 275
- EP-A- 0 616 410
- CH-A- 677 560
- US-A- 4 829 225
- US-A- 5 063 341
- PATENT ABSTRACTS OF JAPAN vol. 018, no. 320 (E-1563), 17.Juni 1994 & JP,A,06 070478 (EBATORON:KK), 11.März 1994,
- PATENT ABSTRACTS OF JAPAN vol. 015, no. 470 (E-1139), 28.November 1991 & JP,A,03 203523 (MITSUBISHI ELECTRIC CORP), 5.September 1991,

## Beschreibung

Die vorliegende Erfindung betrifft ein Verfahren zur Verringerung des Innenwiderstandes von wiederaufladbaren Akkumulatoren, insbesondere Nickel-Cadmium-Akkumulatoren. Die Erfindung betrifft jedoch auch die Anwendung des Verfahrens auf andere Arten von Akkumulatoren (Nickel-Metallhydrid, Lithium-Ionen-Akkumulatoren und dergl.). Außerdem betrifft die Erfindung auch derartige Akkumulatoren, die durch das erfindungsgemäße Verfahren erhältlich sind.

Um die Leistungsfähigkeit von wiederaufladbaren Akkumulatoren zu steigern sind unterschiedliche Verfahren im Stand der Technik bekannt. Die meisten Verfahren beruhen darauf, den Ladestrom oder die Ladespannung beim Ladevorgang des Akkumulators zeitlich und betragsmäßig zu steuern. Außerdem wird durch spezielle Entladegeräte die vollständige Entladung des Akkumulators vor dessen Wiederaufladen sichergestellt.

Allerdings ist all diesen Verfahren und Vorgehensweisen zur Behandlung von wiederaufladbaren Akkumulatoren gemeinsam, daß die Akkumulatoren mit relativ niedrigen Spannungen und Strömen aufgeladen werden.

Dem gegenüber liegt der Erfindung die Aufgabe zugrunde die Leistungsfähigkeit der Akkumulatoren an sich zu steigern.

Dazu macht sich die Erfindung die überraschende Erkenntnis zunutze, daß es möglich ist, den Innenwiderstand von Akkumulatoren zu senken.

Die CH-A-677 560 beschreibt ein Verfahren zum Beseitigen von inneren Kurzschlüssen in Akkumulatorzellen. Damit wird der Innenwiderstand des Akkumulators effektiv erhöht. Diese inneren Kurzschlüsse bestehen aus makroskopischen Metallbrücken, die durch elektrolytische Vorgänge im Inneren des Akkumulators gebildet werden. Die Metallbrücke wird durch das Aufprägen eines Stromstoßes aufgelöst, dessen Dauer im Bereich von Millisekunden und dessen Stärke im Bereich des 10- bis 100-fachen des Ladestroms der Akkumulatorzelle gewählt wird.

Erfindungsgemäß werden die Pole des fabrikneuen Akkumulators mit einer elektrischen Energiequelle verbunden, die zur Abgabe einer elektrischen Energie von wenigstens dem 40-fachen Produkt aus betragsmäßigem Kurzschlußstrom und betragsmäßiger Nennspannung eines unbehandelten Akkumulators eingerichtet ist. Gemäß einer bevorzugten Ausführungsform des erfindungsgemäßen Ver-fahrens ist die Energiequelle eine Gleichspannungsquelle, deren positiver Anschluß mit der Anode des Akkumulators, und deren negativer Anschluß mit der Kathode des Akkumulators verbunden ist. Es ist jedoch auch möglich, die Polung umzudrehen, so daß der positive Anschluß mit der Kathode des Akkumulators und deren negativer Anschluß mit der Anode des Akkumulators verbunden ist. Alternativ dazu kann die Energiequelle auch eine Wechselspannungsquelle sein.

Erfindungsgemäß wird die Energiequelle wenigstens eine Millisekunde mit dem Akkumulator verbunden.

Es ist auch möglich, die Energiequelle wiederholt aus- und einzuschalten, so daß der Akkumulator mehrfach mit der elektrischen Energie gespeist wird.

Vorzugsweise ist die Energiequelle zur Abgabe wenigstens des 1,5-fachen Kurzschlußstroms und der etwa 30-fachen Nennspannung des Akkumulators eingerichtet. Zur Verbesserung des erfindungsgemäBen

Effektes ist die Energiequelle zur Abgabe des wenigstens 1,5-fachen Kurzschlußstroms und der etwa 40-fachen Nennspannung des Akkumulators eingerichtet. Gemäß einer derzeit besonders bevorzugten Ausführungsform ist die Energiequelle zur Abgabe wenigstens des 60-fachen KurzschluBstroms und etwa der 40-fachen Nennspannung eines Akkumulators mit sechs einzelnen Zellen eingerichtet. Für einen Nickel- Cadmium-Akkumulator mit einer Nennspannung von 7,2 V und einem Kurzschlußstrom von etwa 150 A bedeutet dies etwa 300 V Gleichspannung mit etwa 10 kA.

Vorzugsweise wird die Energiequelle ca. 1µsec mit dem Akkumulator verbunden.

Die Spannung bzw. der Strom kann erhöht werden, urn den gewünschten Effekt auf Verringerung des Innenwiderstandes zu verstärken.
Bei Problemen mit der Erwärmung des Akkumulators bei dessen Behandlung kann dieser entsprechend gekühlt werden.

Vorzugsweise geschieht dies durch Eintauchen in eine Flüssigkeit (Öl, Frigen, flüssiger Stickstoff oder dergl.).

Vorzugsweise wird die Energiequelle wenigstens 2 msec mit dem Akkumulator verbunden. Um eine unerwünschte oder nachteilige Erwärmung des Akkumulators zu verhindern, kann neben der vorstehend erwähnten Kühlung des Akkumulators die Energiequelle auch wiederholt abwechselnd ein- und ausgeschaltet werden, um so die Behandlung des Akkumulators in mehrere zeitlich aufeinanderfolgende Abschnitte zu verteilen. Eine gepulste Behandlung des Akkumulators mit 2 bis 200 Impulsen von jeweils etwa 1 µsec bis 2,5 msec Dauer führt auch zu dem erfindungsgemäB gewünschten Ergebnis.

Erfindungsgemäß kann entweder jede einzelne Zelle des Akkumulators (ggf. auch vor der Montage mehrerer einzelner Akkumulatorzellen zu einem Akkutnulatorpaket) gemäß dem vorstehenden Verfahren behandelt werden, oder ein montiertes Akkumulatorpaket bestehend aus mehreren einzelnen Akkumulatorzellen wird nach dem Zusammenbau behandelt. In letzterem Fall wird, je nach dem, ob es sich um eine Parallelschaltung und/oder eine Serienschaltung aus einzelnen Akkumulatorzellen handelt, der Strom und/oder die Spannung entsprechend der Anzahl der Zellen erhöht.

Gute Ergebnisse werden mit dem erfindungsgemäßen Verfahren auch dann erzielt, wenn Akkumulatoren mit dem erfindungsgemäßen Verfahren behandelt werden, die noch nicht mehr als etwa 10, vorzugsweise 2-3 Lade- und Entladevorgängen unterworfen wurden.

Eine zur Durchführung des Verfahrens geeignete Energiequelle liefert die notwendigen hohen Ströme und Spannungen für die gewünschten Zeitspannen indem sie eine Kondensatoranordnung aufweist, deren Kapazität und Spannungsfestigkeit so gewählt sind, daB sie die elektrische Energie (für die kurze Zeitspanne) an den Akkumulator abgeben kann. Da sich eine Kondensatoranordnung C über einen Widerstand R (hier den Innenwiderstand des Akkumulators) definiert entlädt, kann der dem Akkumulator zugeführte Energieinhalt sehr einfach und zeitlich definiert festgelegt werden (Zeitkonstante τ = R•C). Alternativ dazu besteht jedoch auch die Möglichkeit, mit Hilfe geeigneter Halbleiterschalter und einer entsprechenden Ansteuerschaltung die Energie aus dem Stromnetz direkt zu entnehmen.

Weitere Eigenschaften, Vorteile und Merkmale der Erfindung werden anhand der nachstehenden Beschreibung eines derzeit bevorzugten Ausführungsbeispiels erläutert.
- Fig. 1: zeigt ein Prinzipschaltbild, gemäß dem ein Akkumulator mit einer Energiequelle verbunden wird.
- Fig. 2: zeigt einen Prinzipschaltplan einer erfindungsgemäßen Energiequelle zur Durchführung des erfindungsgemäßen Verfahrens.

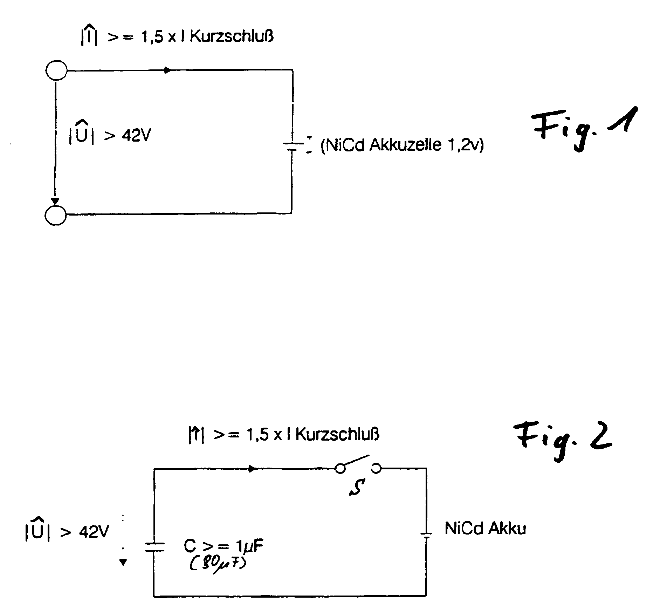

Wie in Fig. 1 gezeigt, wird eine Nickel-Cadmium-Akkumulatorzelle (mit einer Nennspannung von 1,2 V mit einer Energiequelle verbunden, die eine betragsmäßige Spannung von wenigstens 42 V und einem betragsmäßigem Strom von wenigstens dem 1,5-fachen Kurzschlußstrom I_{K} abzugeben in der Lage ist. Versuche haben gezeigt, daß der erfindungsgemäße Effekt der Verringerung des Innenwiderstands der Akkumulatorzelle sich bei etwa 60 V Gleichspannung und etwa 225 A Gleichstrom einstellt, wenn diese Energie (13,5 kW) für etwa 2 msec an die Nickel-Cadmium-Zelle angelegt wird. Gemäß einer derzeit bevorzugten Ausführungsvariante werden 300 V Gleichspannung mit etwa 10 kA Gleichstrom für 2 msec an die Nickel-Cadmium-Zelle angelegt.

Fig. 2 zeigt eine mögliche Schaltungsanordnung zur Durchführung des erfindungsgemäßen Verfahrens. Um den für die erfindungsgemäße Behandlung des Akkumulators erforderlichen Strom mit der wünschenswert hohen Spannung bereitzustellen, hat die gezeigte Kondensatoranordnung eine Kapazität von etwa 80 µFarad bis etwa 250 mFarad (vorzugsweise etwa 7 mFarad) bei einer Spannungsfestigkeit von ca. 500 V. Der den Nickel-Cadmium-Akkumulator mit der Kondensatoranordnung C verbindende Schalter S kann als manuell betätigbarer Leistungsschalter oder als elektronisch ansteuerbarer Leistungshalbleiterschalter ausgestaltet sein. Die Aufladung der Kondensatoranordnung C erfolgt (in nicht weiter veranschaulichter Weise) aus dem Stromnetz über einen Gleichrichter.

Ein Nickel-Cadmium-Akkumulator, der erfindungsgemäß für 0,2 bis 5 msec bei 300 V Gleichspannung mit etwa 10 kA Gleichstrom beaufschlagt wird, hat im späteren Betrieb bei einem Entladestrom von 20 A eine um 20 mV erhöhte Ausgangsspannung (pro einzelner Zelle). Dies entspricht einem um 1 mΩ verringerten Innenwiderstand Rᵢ.

Abwandlungen des erfindungsgemäßen Verfahrens (Behandlung mit höherem Strom, höherer Spannung, größerer Zeitdauer der Behandlung oder gepulster Beaufschlagung des Akkumulators mit der elektrischen Energie) sind in der oben beschriebenen Weise möglich und durch den Erfindungsgedanken umfaßt. Auch die erfindungsgemäße Schaltung (Fig. 2) kann durch eine andere Energiequelle ersetzt werden ohne den Erfindungsgedanken zu verlassen, solange die Energiequelle die Energie in der erfindungsgemäß beschriebenen Weise liefert.

## Patentansprüche

1. Verfahren zur Verringerung des Innenwiderstandes (Rᵢ) von fabriknenen wiederaufladbaren Akkumulatoren, insbesondere von Nickel-Cadmium-Akkumulatoren, bei dem an die Pole (+/-) des Akkumulators eine elektrische Energiequelle angeschlossen wird, die zur Abgabe einer elektrischen Energie von wenigstens dem 40-fachen Produkt aus betragsmäßigem Kurzschlußstrom (I_{K}) und betragsmäßiger Nennspannung eines unbehandelten Akkumulators eingerichtet ist, und wobei der Akkumulator mit der Energie für eine vorbestimmte Zeitdauer beaufschlagt wird.

2. Verfahren nach Anspruch 1, bei dem die Energiequelle eine Gleichspannungsquelle ist, deren positiver Anschluß (+) mit der Anode des Akkumulators, und deren negativer Anschluß (-) mit der Kathode das Akkumulators verbunden ist.

3. Verfahren nach Anspruch 1, bei dem die Energiequelle eine Gleichspannungsquelle ist, deren positiver Anschluß mit der Kathode des Akkumulators, und deren negativer Anschluß mit der Anode des Akkumulators verbunden ist.

4. Verfahren nach Anspruch 1, bei dem die Energiequelle eine Wechelspannungsquelle mit zwei Ausgangsanschlüssen ist, von denen jeweils einer mit der Anode bzw. der Kathode des Akkumulators verbunden ist.

5. Verfahren nach einem der Ansprüche 1 bis 4, bei dem die Energiequelle für wenigstens eine Microsekunde (1 µsec) mit dem Akkumulator verbunden ist, um diesen mit der elektrischen Energie zu beaufschlagen.

6. Verfahren nach Anspruch 5, bei dem die Energiequelle wiederholt abwechselnd an- und ausgeschaltet wird.

7. Verfahren nach einem der Ansprüche 1 bis 4, **dadurch gekennzeichnet, daß** die Energiequelle zur Abgabe wenigstens des 1,5-fachen Kurzschlußstroms (I_{K}) und der 40 bis 30-fachen Nennspannung des Akkumulators eingerichtet ist.

8. Verfahren nach Anspruch 7, bei dem die Energiequelle zur Abgabe wenigstens des 1,5-fachen Kurzschlußstroms (I_{K}) und der 40-fachen Nennspannung des Akkumulators eingerichtet ist.

9. Verfahren nach Anspruch 8, bei dem die Energiequelle zur Abgabe des 60-fachen Kurzschlußstroms und der 300-fachen Nennspannung des Akkumulators eingerichtet ist.

10. Verfahren nach einem der Ansprüche 7 bis 9, bei dem die Energiequelle wenigstens 1 µsec mit dem Akkumulator verbunden ist um diesen mit der elektrischen Energie zu beaufschlagen.

11. Verfahren nach Anspruch 10, **dadurch gekennzeichnet, daß** die Energiequelle wiederholt abwechselnd an- und ausgeschaltet wird.

12. Verfahren nach einem der Ansprüche 1 bis 11, bei dem jede Zelle eines mehrere Zellen aufweisenden Akkumulators einzeln behandelt wird.

13. Verfahren nach einem der Ansprüche 1 bis 12, bei dem mehrere Zellen parallel behandelt werden, wobei der Strom entsprechend der Anzahl der Zellen erhöht wird.

14. Verfahren nach einem der Ansprüche 1 bis 12, bei dem mehrere Zellen in Reihe geschaltet behandelt werden, wobei die Spannung entsprechend der Anzahl der Zellen erhöht wird.

## Claims

1. Method for reducing the internal resistance (Rᵢ) of rechargeable batteries, in particular of nickel cadmium rechargeable batteries, in which an electrical power source is connected to the poles (+/-) of the rechargeable battery, which electrical power source is designed to emit an electrical power equivalent to at least 40 times the product of the magnitude of the short-circuit current (I_{K}) and of the magnitude of the rated voltage of an untreated rechargeable battery, and with the power being applied to the rechargeable battery for a predetermined time period.

2. Method according to Claim 1, in which the power source is a DC voltage source, whose positive connection (+) is connected to the anode of the rechargeable battery, and whose negative connection (-) is connected to the cathode of the rechargeable battery.

3. The method as claimed in Claim 1, in which the power source is a DC voltage source, whose positive connection is connected to the cathode of the rechargeable battery and whose negative connection is connected to the anode of the rechargeable battery.

4. Method according to Claim 1, in which the power source is an AC voltage source with two output connections, one of which is respectively connected to the anode and to the cathode of the rechargeable battery.

5. Method according to one of Claims 1 to 4, in which the power source is connected to the rechargeable battery for at least one microsecond (1 µs) in order to apply the electrical power to it.

6. Method according to Claim 5, in which the power source is alternately and repeatedly connected and disconnected.

7. Method according to one of Claims 1 to 4, **characterized in that** the power source is designed to admit at least 1.5 times the short-circuit current (I_{K}) and 40 to 30 times the rated voltage of the rechargeable battery.

8. Method according to Claim 7, in which the power source is designed to emit at least 1.5 times the short-circuit current (I_{K}) and 40 times the rated voltage of the rechargeable battery.

9. Method according to Claim 8, in which the power source is designed to emit 60 times the short-circuit current and 300 times the rated voltage of the rechargeable battery.

10. Method according to one of Claims 7 to 9, in which the power source is connected to the rechargeable battery for at least 1 µs in order to apply the electrical power to it.

11. Method according to Claim 10, **characterized in that** the power source is alternately and repeatedly connected and disconnected.

12. Method according to one of Claims 1 to 11, in which each cell in a rechargeable battery which has two or more cells is treated individually.

13. Method according to one of Claims 1 to 12, in which two or more cells are treated in parallel, with the current being increased to correspond to the number of cells.

14. Method according to one of Claims 1 to 12, in which two or more cells are treated connected in series, with the voltage being increased to correspond to the number of cells.

## Revendications

1. Procédé pour réduire la résistance interne (Rᵢ) d'accumulateurs rechargeables sortant de l'usine, notamment des accumulateurs au nickel et au cadmium, selon lequel on raccorde aux pôles (+/-) de l'accumulateur une source d'énergie électrique, qui est conçue pour délivrer une énergie électrique égale au moins à 40 fois le produit du courant de court-circuit en valeur absolue (I_{K}) par la tension nominale en valeur absolue d'un accumulateur non traité, et selon lequel on charge l'accumulateur avec l'énergie pendant un intervalle de temps prédéterminé.

2. Procédé selon la revendication 1, selon lequel la source d'énergie est une source de tension continue, dont la borne positive (+) est reliée à l'anode de l'accumulateur et dont la borne négative (-) est reliée à la cathode de l'accumulateur.

3. Procédé selon la revendication 1, selon lequel la source d'énergie est une source de tension continue, dont la borne positive est reliée à la cathode de l'accumulateur et dont la borne négative est reliée à l'anode de l'accumulateur.

4. Procédé selon la revendication 1, selon lequel la source d'énergie est une source de tension alternative comportant deux bornes de sortie, dont l'une est reliée à l'anode et l'autre à la cathode de l'accumulateur.

5. Procédé selon l'une des revendications 1 à 4, selon lequel la source d'énergie est reliée pendant au moins une microseconde (1 µs) à l'accumulateur, pour charger ce dernier avec l'énergie électrique.

6. Procédé selon la revendication 5, selon lequel la source d'énergie est branchée et débranchée alternativement de façon répétée.

7. Procédé selon l'une des revendications 1 à 4, **caractérisé en ce que** la source d'énergie est conçue pour délivrer au moins 1,5 fois le courant de court-circuit (I_{K}) et entre 40 et 30 fois la tension nominale de l'accumulateur.

8. Procédé selon la revendication 7, selon lequel la source d'énergie est conçu pour délivrer au moins 1,5 fois le courant de court-circuit (I_{K}) et 40 fois la tension nominale de l'accumulateur.

9. Procédé selon la revendication 8, selon lequel la source d'énergie est conçue pour délivrer 60 fois le courant de court-circuit et 300 fois la tension nominale de l'accumulateur.

10. Procédé selon l'une des revendications 7 à 9, selon lequel la source d'énergie est reliée pendant au moins 1 µs à l'accumulateur pour charger ce dernier avec l'énergie électrique.

11. Procédé selon la revendication 10, **caractérisé en ce que** la source d'énergie est branchée et débranchée alternativement de façon répétée.

12. Procédé selon l'une des revendications 1 à 11, selon lequel on traite individuellement chaque cellule d'un accumulateur possédant plusieurs cellules est traitée.

13. Procédé selon l'une des revendications 1 à 12, selon lequel on traite plusieurs cellules en parallèle, le courant étant accru conformément au nombre des cellules.

14. Procédé selon l'une des revendications 1 à 12, selon lequel on traite plusieurs cellules branchées en série, la tension étant accrue conformément au nombre des cellules.
